# EUROPÄISCHE PATENTSCHRIFT

(11) **EP 1 197 391 B1**
(45) Veröffentlichungstag und Bekanntmachung des Hinweises auf die Patenterteilung: **29.12.2004**
(21) Anmeldenummer: 01123107.3
(22) Anmeldetag: 27.09.2001
(51) Int. Cl.: B60R 7/04, B60R 7/02, B60R 7/08

(54) **An einer Fahrzeugwand lösbarer, befestigter Behälter**
Container releasably fastened to a vehicle wall
Conteneur fixé de façon amovible à une paroi de véhicule

(30) Priorität: 18.10.2000 DE 10051666
(43) Veröffentlichungstag der Anmeldung: 17.04.2002
(73) Patentinhaber: DaimlerChrysler AG, 70567 Stuttgart (DE)
(72) Erfinder: Eipper, Konrad, 72108 Rottenburg (DE)

(56) Entgegenhaltungen:
- DE-A- 2 916 038
- DE-A- 3 730 459
- DE-A- 4 441 842
- DE-U- 8 509 818
- DE-U- 8 900 151
- GB-A- 2 031 375

## Beschreibung

Die Erfindung betrifft einen an einem Fahrzeug lösbar befestigten Behälter nach dem Oberbegriff des Patentanspruchs°1.

Ein solcher Behälter ist aus der GB 2 031 375 A als Schutzbehälter für Sturzhelme bekannt.

Ein aus starrem Material in der Form einer Metallkassette ausgebildeter Behälter ist als Wertsachenbehälter für Kraftfahrzeuge aus DE 2916038 A1 bekannt.

Einen zusammenklappbaren, als Falttasche ausgebildeten Behälter, der innerhalb eines Fahrzeugs als Aufnahmebehälter für Ablageteile anbringbar ist, zeigt DE 8509818 U.

DE 3730459 A1 beschreibt einen lösbar im Inneren eines Fahrzeugs anbringbaren, als Tasche aus flexiblem Material ausgebildeten Behälter.

Schnittfeste faltbare Materialien sind an sich mit Bezug auf Teile von Kraftfahrzeugen an sich aus DE 4441842 A1 und mit Bezug auf als Taschen ausgebildete Behälter aus DE 8900151 U bekannt.

Die Erfindung beschäftigt sich mit dem Problem, innerhalb eines Fahrzeugs, insbesondere in dessen Insassenbereich, einen diebstahlsicher an der Fahrzeugkarosserie abnehmbar befestigten und gegen ein unbefugtes Öffnen durch entsprechendes Material und einen entsprechenden Öffnungsmechanismus gesicherten Behälter in unbeladenem Zustand in einem möglichst raumsparenden und ästhetisch ansprechenden Zustand vorliegen zu haben. Weiterhin soll der Behälter in befestigtem Zustand auch beladen sein können, wobei er in diesem Zustand einen größeren Ablageraum einnehmen soll als in unbeladenem Zustand, in dem er möglichst unauffällig in zu anderen Zwecken vorhandenen Fahrzeugteilen bzw. an der Fahrzeugkarosserie selbst abgelegt sein soll.

Eine Lösung dieses Problems zeigt eine Ausbildung eines gattungsgemäßen Behälters nach den kennzeichnenden Merkmalen des Patentanspruchs 1 auf.

Vorteilhafte und zweckmäßige Ausgestaltungen sind Gegenstand der Unteransprüche.

Die Erfindung beruht auf dem allgemeinen Gedanken, einen aus diebstahlmäßig undurchdringbarem, faltbarem Material bestehenden Behälter als zusammenfaltbare, verschließbare Tasche auszubilden, die möglichst unauffällig innerhalb eines Fahrzeuginnenraums diebstahlsicher mit dem Fahrzeug verbunden ablegbar ist. In von dem Fahrzeug gelöstem Zustand ist der Behälter wie eine übliche Tasche handhabbar und zu diesem Zweck mit entsprechenden Tragegriffen in taschenüblicher Weise ausgebildet. Für den Verschluss des Behälters selbst wie für den Verschluss an dem Fahrzeug können vorteilhafterweise beide Zwecke gleichermaßen erfüllende einheitliche Verschlussmittel vorgesehen sein.

Die Abdeckmittel, mit denen der zusammenfaltbare Behälter in unbeladenem Zustand innerhalb des Fahrzeugs verdeckt wird, können fahrzeugseitig schwenkbar angelenkt sein. Dabei können diese Mittel in der Form einer Klappe ausgebildet sein, die auch in sich nochmals klappbar ist, um beispielsweise bei einer Anbringung oberhalb des fahrzeugseitig befestigten Behälters diesen von oben winkelförmig umgreifen zu können. Die Abdeckung kann vorteilhafterweise in eine Innenraumverkleidung eines Fahrzeugs integriert sein, d. h. ein Bestandteil dieser sein.

Ein Ausführungsbeispiel der Erfindung ist in der Zeichnung dargestellt.

In dieser zeigen
- Fig. 1: eine Seitenansicht eines an einer Fahrzeugseitenwand unter Verschluss angebrachten Behälters bei beladenem Zustand dieses Behälters,
- Fig. 2: den nach Fig. 1 fahrzeugseitig befestigten Behälter in unbeladenem, abgedecktem Zustand.

Ein als zusammenfaltbare Tasche ausgebildeter Behälter 1 ist über lösbare Verschlussmittel 2 gegen ein Abnehmen verschlossen an der Innenseite einer Kraftfahrzeugseitenwand 7 angebracht. Die Verschlussmittel 2 bestehen fahrzeugseitig aus einem mit einer Öffnung versehenen Halter 3, auf den obere Verschlussbügel 4 des Behälters 1 über in diesen vorgesehene Öffnungen aufschiebbar sind. Des weiteren gehört zu den Verschlussmitteln 2 ein in den Halter 3 einsetzbares Schloss 5. Insbesondere das Schloss 5 kann selbstverständlich in einer ästhetisch ansprechenden Weise in den Behälter 1 und dort insbesondere in die Verschlussbügel 4 integriert werden.

Das faltbare Material des Behälters 1 kann aus schnittfestem Fasermaterial bestehen, wobei dieses Gewebe insbesondere ein Aramidgewebe sein kann. Ein als abnehmbare Tasche ausgebildeter Behälter 1 aus einem solchen Material besitzt zusätzlich den Vorteil, dass diese Tasche auch beim Tragen durch eine Person vor einem unbefugten Zugang zum Inneren hin gesichert ist. Mit direkt an dem Behälter 1 vorgesehenen Verschlussmitteln 2 kann dieser auch bei der Verwendung als Tasche bei einer Ablage außerhalb des Fahrzeugs an ortsfesten Teilen abnahmesicher angeschlossen werden, beispielsweise über eine an der Tasche noch zusätzlich vorgesehene Kette, die auch als getrennt transportierbares Teil im Bedarfsfall angesetzt werden kann.

An einer Fahrzeugseitenwand 7 kann die Ablageposition unterhalb einer schwenkbaren, als Klappe ausgebildeten Abdeckung 6 liegen. Die Abdeckung 6 ist an der Seitenwand 7 schwenkbar angelenkt und darüber hinaus auch noch in sich selbst achsparallel klappbar. Dadurch kann die Abdeckung 6 einen in gefülltem Zustand an der Fahrzeugseitenwand 7 befestigten Behälter 1 von oben winkelförmig umfassen.

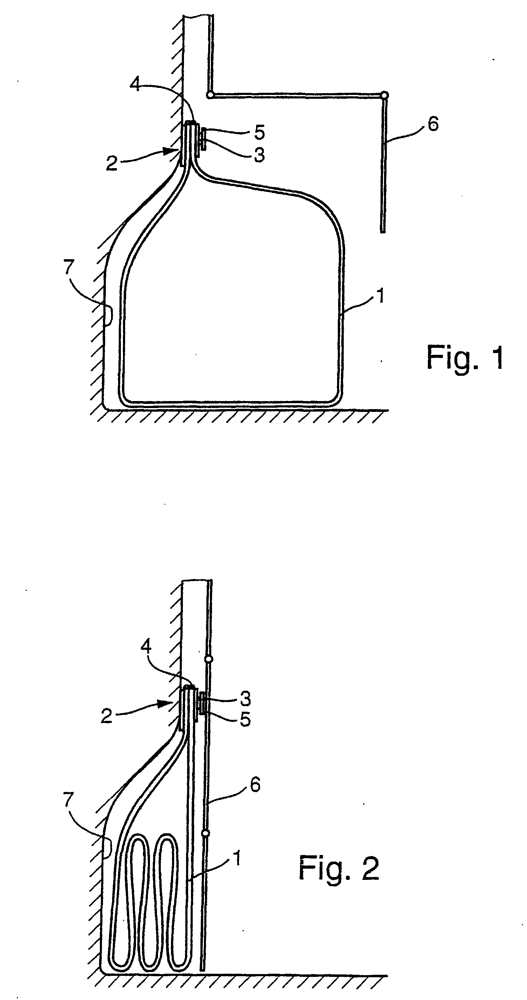

In leerem Zustand kann der Behälter 1 ziehharmonikaförmig in Richtung seiner Seitenwände zusammengeklappt werden, wie dies in Fig. 2 dargestellt ist. In diesem Zustand wird der Behälter 1 von der Abdeckung 6 vollständig verdeckt. Bei einer Ausbildung der Abdeckung 6 als ein Teil der Innenverkleidung eines Fahrzeuginnenraums ist ein leerer Behälter 1 praktisch unsichtbar bzw. in jedem Fall äußerst unauffällig innerhalb eines Fahrzeuginnenraums ablegbar.

Mögliche Ablagepositionen sind neben derjenigen an einer Fahrzeugseitenwand 7 beispielsweise der Fahrzeugboden mit insbesondere Bereichen in oder an den Fahrzeugsitzen. Auch in Türen und ansich bereits vorhandenen Klappen ist die Unterbringung des erfindungsgemäßen Behälters möglich.

## Patentansprüche

1. Fahrzeug mit einem verschließbaren Behälter (1), der mit verschließbaren Haltemitteln am Fahrzeug lösbar befestigt ist und aus für einen zum Behälterinneren hin unberechtigten Zugang undurchdringbarem Material besteht, wobei der Behälter (1) als Tasche und das undurchdringbare Material faltbar ausgebildet sind
**dadurch gekennzeichnet, dass** das Fahrzeug eine dem Behälter (1) zugeordnete fahrzeugseitig befestigte Abdeckung (6) aufweist und
dass der Behälter (1) in seiner Ablageposition innerhalb des Fahrzeugs in zusammengefaltetem Zustand von der fahrzeugseitig befestigten Abdeckung (6) verdeckbar ist.

2. Fahrzeug nach Anspruch 1,
**dadurch gekennzeichnet,**
**dass** die fahrzeugseitige Abdeckung (6) eine fahrzeugseitig schwenkbar angelenkte Klappe ist.

3. Fahrzeug nach Anspruch 2,
**dadurch gekennzeichnet,**
**dass** die Klappe zusätzlich auch noch in sich parallel zu der fahrzeugseitigen Schwenkachse klappbar ist.

## Claims

1. Vehicle with a lockable container (1) releasably attached to the vehicle by lockable retaining means and made of a material impermeable to unauthorised access to its interior, the container (1) being designed as a bag and the impermeable material being foldable,
**characterised in that**
a cover (6) attached to the vehicle is assigned to the container (1), and **in that** the container (1) can, in its folded state, be covered by the cover (6) attached to the vehicle in its stowage position within the vehicle.

2. Vehicle according to claim 1,
**characterised in that**
the cover (6) attached to the vehicle is a flap pivoted on the vehicle.

3. Vehicle according to claim 2
**characterised in that**
the flap is additionally pivoted parallel to the to the swivel axis on the vehicle.

## Revendications

1. Véhicule avec un conteneur verrouillable (1) fixé de façon amovible au véhicule à l'aide de moyens de fixation verrouillables et constitué d'un matériau impénétrable pour un accès non autorisé à l'intérieur du conteneur, le conteneur (1) étant conçu comme une poche et le matériau impénétrable étant pliable, **caractérisé en ce que** le véhicule présente un couvercle (6) associé au conteneur (1) et fixé du côté du véhicule et **en ce que** le conteneur (1) peut être recouvert, dans sa position de rangement à l'intérieur du véhicule, à l'état replié, par le couvercle (6) fixé du côté du véhicule.

2. Véhicule selon la revendication 1, **caractérisé en ce que** le couvercle (6) du côté du véhicule est un volet articulé de manière pivotante du côté du véhicule.

3. Véhicule selon la revendication 2, **caractérisé en ce que** le volet en lui-même peut être de plus plié parallèlement à l'axe de pivotement du côté du véhicule.
